# EUROPEAN PATENT APPLICATION

(11) **EP 0 856 827 A1**
(43) Date of publication of application: **05.08.1998**
(21) Application number: 98300771.7
(22) Date of filing: 03.02.1998
(51) Int. Cl.: G08B 17/107

(54) **Photodetector with coated reflector**

(30) Priority: 04.02.1997 US 800645
(71) Applicant: PITTWAY CORPORATION, Chicago, Illinois 60606 (US)
(72) Inventor: So, Bernard Y.C., Wheaton, Illinois 60187 (US); Bohanon, Mark, Lisle, Illinois 60532 (US); Dauskurdas, Edward, North Aurora, Illinois 60542 (US)
(74) Representative: O'Connell, David Christopher

(57) **Abstract**

A corrosion resistant photoelectric smoke detector incorporates a housing with a plurality of smoke admitting openings. The housing defines an internal smoke receiving region. A source which generates a beam of radiant energy which is projected across the region is carried by the housing. A collector of radiant energy is positioned along the axis of the beam. The collector is coupled to a sensor of radiant energy. Radiant energy in the beam scattered by smoke in the internal region is in part incident on the collector. The collector, via a plurality of reflections directs the incident scattered radiant energy onto the sensor. The collector carries a corrosion resistant coating or is formed of a reflective corrosion resistant material.

## Description

### Field of the Invention:

The invention pertains to the field of photoelectric smoke detectors. More particularly, the invention pertains to such detectors which incorporate reflectors for improved performance.

### Background of the Invention:

Photoelectric smoke detectors are known and are useful in detecting certain types of fires. Known detectors combine a housing having an internal chamber with a source of radiant energy. The source of radiant energy could, for example, be a light emitting diode.

The source of radiant energy projects radiant energy as a beam or rays into the internal chamber. As is well known, in the presence of smoke in the internal chamber, one or more of the photons emitted by the source will be deflected or scattered.

In conventional photoelectric detectors, a portion of the scattered radiant energy is incident on a photodetector, such as a photodiode located in the chamber. The degree of scattered radiant energy is indicative of the degree of smoke in the chamber. The output of the sensor or photodiode thus provides an indication of a fire condition.

In the absence of any smoke, photodetectors emit a level of background noise which is due to airborne dust or the like in the chamber. These airborne particles cause reflections which reach the photodetector even in the absence of smoke. Such noise can contribute to false alarms.

Hence, one of the areas where known photoelectric detectors could be improved is in the signal-to-noise ratio of the output signal. Given that the output signal must usually be amplified to achieve a high enough level to be used with subsequent processing circuitry, the higher of the signal-to-noise ratio, the more discernible will be the true signal.

There thus continues to be a need for structures which will improve the signal-to-noise ratio of photoelectric detectors, preferably without significantly raising the cost thereof. Preferably, such improvement in the signal-to-noise ratio could also be achieved by means of passive elements which would not require any electrical energy.

### Summary of the Invention:

A photoelectric smoke detector has a chamber which defines an internal volume and which admits ambient smoke. A source of radiant energy or light, such as a light emitting diode or a laser diode, is positioned so as to direct radiant energy into the chamber. A reflector is also provided in the chamber.

The reflector can be conically shaped, at least in part, so as to direct scattered incident radiant energy, via one or more reflections onto an associated photosensor. For example, the reflector could be formed with a conical or cylindrical-like body with an aperture formed on one end thereof. The aperture could be formed by an intersection of the reflector body and a geometrical shape such as a plane.

The reflector can be formed with an interior reflecting region. This region could be formed of an electrodeposited chromium layer. Chromium is corrosion resistant and relatively inexpensive.

Chromium is an excellent reflector in a range of 780-830 nanometers. It is especially beneficial when used with a laser diode that emits light at a wavelength of 780 nanometers.

A portion of the housing can be conically shaped, at least in part, and formed of a reflective metal or a plated plastic. A sensor can be positioned at a small diameter end of the conical reflective region. Light, scattered by smoke particles, which is incident upon the conical or tapered, reflective region is directed by one or more reflections onto the photosensor.

Use of the reflector as described above substantially increases the signal level to the sensor producing an enhanced signal-to-noise ratio. In addition to having a significantly improved signal-to-noise ratio, a lower gain can be used in the output amplifier to which the photodetector is coupled.

A multiple element reflector can be provided to direct reflected, scattered light, at least in part, in the same direction which the radiant energy travels on its way to being scattered. Such reflectors can be combined with a source and a sensor to form an integrated solid state module.

Thus, the use of a reflector to focus scattered light from the smoke increases the number of photons that reach the photodiode or the sensor by capturing the scattered photons over a wide range of angles such as 180° or 360°. By a plurality of reflections, the captured photons are then focused onto the sensor or the photodiode.

These and other aspects and attributes of the present invention will be discussed with reference to the following drawings and accompanying specification.

### Brief Description of the Drawing:

Figure 1 is a side elevational view, partly in section, illustrating a detector;
Figure 2 is a schematic block diagram of an alternate embodiment of a photoelectric detector;
Figures 3A and 3B illustrate structural details of a collector of scattered radiant energy;
Figures 4A through 4D illustrate alternate collector geometries usable with the photoelectric detector of Fig. 2;
Figure 5 is a top plan view of a portion of a photoelectric detector in accordance with another embodiment;
Figure 6 is a section taken along plane 6-6 of Fig. 5; and
Figure 7 is an enlarged perspective view of a coated, corrosion resistant reflector of radiant energy.

### Detailed Description of the Preferred Embodiments:

While this invention is capable of embodying many different forms, there are shown in the drawing, and will be described herein in detail, specific embodiments thereof with the understanding that the present disclosure is to be considered as an exemplification of the principles of the invention and is not intended to limit the invention to the specific embodiments illustrated.

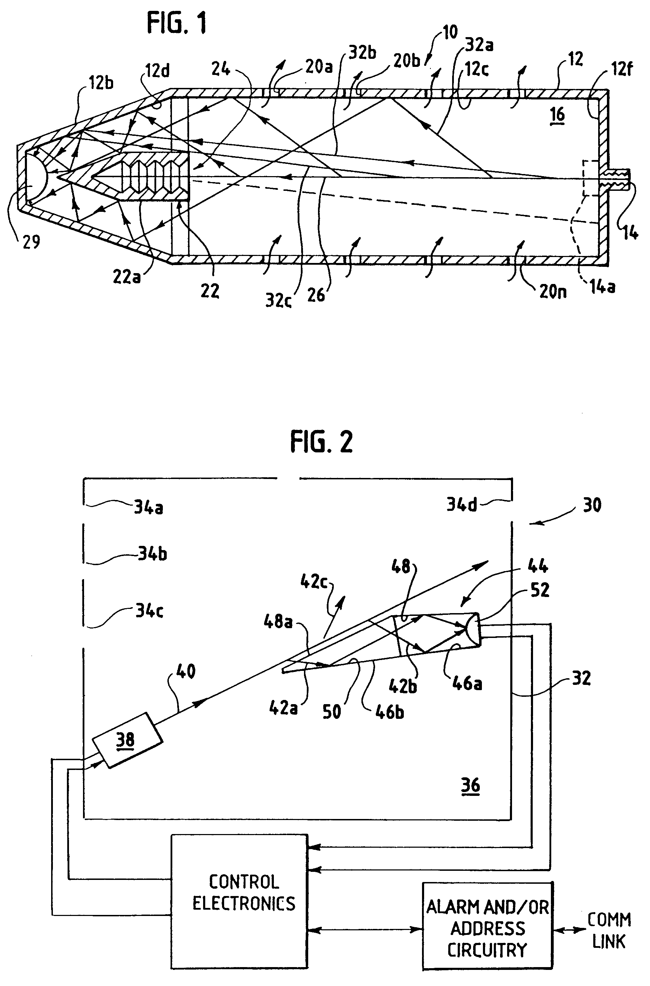

Figure 1 illustrates a photoelectric detector 10 in accordance with the present invention. The detector 10 includes a housing 12 which can be, but need not be, cylindrical. The housing 12 has a first, radiant energy input, end 12a, and a second tapered or conically shaped, radiant energy collecting end 12b.

Radiant energy, as generated by a source, which could be a laser, can be injected into the housing 12 via radiant energy input port 14. It will also be understood that a laser diode, for example, could be positioned at the input port 14. Alternately, a source 14a, illustrated in phantom, could be positioned within the housing 12.

The housing 12 defines an internal volume 16. The walls of the housing 12 are perforated and exhibit a plurality of openings or apertures 20a, 20b...20n. The plurality of apertures 20 provides for ingress and egress of smoke bearing ambient air into the volume 16.

A light nap 22 is positioned within the volume 16 and is oriented, as illustrated in Fig. 1, on an axis along which the injected beam of radiant energy 26 is expected to travel. The light trap 22 contains a internal light absorbing region generally indicated at 24. The light trap 22 is intended to absorb all incoming, nonscattered radiant energy 26 received in the region 16 via the port 14 or via the internally located source 14a.

The interior surfaces 12c and 12d are reflective. The housing 12 can be made of reflective metal or plastic with the regions 12c and 12d plated with a reflective material. The wall 12f has a non-reflective, flat black, surface. The exterior surface 22a of the light trap 22 is also reflective.

A photosensor 29, with or without a lens, is positioned at the end of the conical region 12b and collects reflected, scattered light or photons. The electrical output of the sensor 29 is an indication of the incident scattered light or photons.

Particles of smoke carried on the air in the region 16 cause forward scattering, illustrated by scattered rays 32a, 32b, 32c. The scattered rays or photons are reflected off of the surfaces 12c and 12d and are directed to the photosensor 29 where they are collected. The detector 10 is particularly advantageous in that it collects scattered rays or photons throughout a 360° region around the beam 26. If the scattering angle is too great, the deflected photon or ray may exit one of the apertures, such as the aperture 20a and be lost.

Back scattering may occur. Back scattered photons may be incident on the wall 12f and be absorbed or reflect off of surface 12c and 12d and ultimately be collected at the sensor 29. The surface 12f also absorbs any unwanted light which is reflected out of the central internal region 24 of the light trap 22.

In summary, smoke enters the interior volume 16 of the detector 10 through the air openings or apertures 20a...20n. Radiant energy, from an external or an internal source such as a laser, a laser diode, or a light emitting diode, is scattered in all directions.

Forward scattered radiant energy is reflected off of surfaces 12c and 12d toward the sensor 29 where it is detected. Any light or radiant energy which escapes from the light trap 22 is absorbed by the nonreflective rear surface 12f.

Figure 2 illustrates an alternate embodiment 30 of a photoelectric detector in accordance with the present invention. The detector 30 is formed with a housing 32 which might be manufactured using nonreflective plastic. The housing 32 has formed therein a plurality 34 of smoke admitting apertures, such as the apertures 34a, 34b, 34c and 34d. Ambient smoke in the atmosphere surrounding the housing 32 can enter an internal chamber 36 within the housing 32.

The housing 32 also carries a source 38 which could be a light emitting diode, a laser diode or any other source of radiant energy. The source 38 generates a beam 40 of radiant energy which is projected in a predetermined fashion across a portion of the region 36.

As the beam of radiant energy travels through the region 36, photons therein intersect and reflect off of particles of smoke or combustion products which have entered the chamber 36 causing scattering as is well known. Representative scattered rays 42a, 42b and 42c are scattered by smoke particles in the region 36 in the indicated directions.

Positioned adjacent to the beam 40 is a scattered light or scattered photon collector 44 (illustrated partly broken away). The collector 44 can be formed, for example, of a reflective metal or a plated plastic. The collector 44 is formed with a hollow, conical body portion 46a with an interior scattered light receiving region 48. A second tapered, conical region 46b joins the body portion 46a and provides an aperture 48a for incident, scattered light. The aperture 48a is positioned adjacent to the beam 40 and oriented such that scattered rays or photons 42a, 42b are reflected off of an internal reflective surface 50 and directed onto a photosensor or photodetector 52.

As is apparent from Fig. 2 while the collector 44 will collect a portion of the scattered rays or photons, 42a, 42b, it will not collect all such scattered photons such as the scattered ray or photon 42c. To increase the number of collected photons, it would be possible to use a second or a third collector 44 positioned around the beam 40 so as to collect a larger number of scattered photons.

Notwithstanding the fact that the collector 44, if used alone, does not collect all scattered photons, it collects many of the photons scattered over a 180° field. As a result of directing the collected scattered photons onto the sensor 52, the signal output from the detector 52 will exhibit a higher signal-to-noise ratio than in structures where the detector 52 is used by itself and without a collector such as the collector 44.

It will be understood that the detector 10, as well as detector 30 could be used with control electronics of a conventional type for purposes of energizing the source 38 and detecting signals from the sensor 52. The detectors 10, 30 could be used as stand-alone units wherein the control electronics include circuitry for driving an audible output device, such as a piezoelectric horn, or a visual alarm device such as a strobe light when an alarm condition is detected in any known fashion.

The detectors 10, 30 can also be used in multiple detector fire alarm systems having a central control unit or control panel to which a plurality of detectors, such as the detectors 10, 30 can be coupled. In such event, the control electronics would be coupled to local address and interface circuitry such that the respective detector could communicate in a bidirectional fashion by RF or infrared transmission or by cable.

It will be understood that such communications details are not a limitation of the present invention. One representative communication system is disclosed in Tice et al., U.S. Patent No. 4,916,432, which is assigned to the assignee of the present application. The specification and figures of the Tice et al. patent are hereby incorporated by reference.

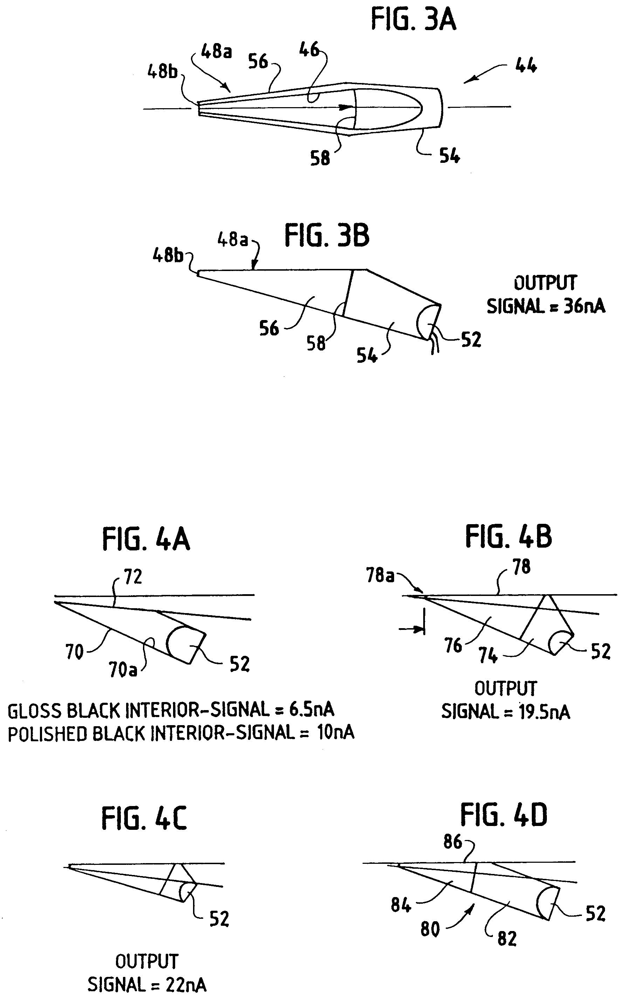

Figures 3A and 3B illustrate further details of the structure of the collector 44. The body portion 46a of the collector 44 is formed with a first tapered exterior surface 54 and a corresponding interior, tapered, reflective surface. A second tapered exterior surface 56 is associated with the body portion 46b. It too has associated therewith a internal, tapered reflective surface. For example, the surfaces 54 and 56 could be conical and intersect at a bounding line or plane 58.

The aperture 48a can be formed by intersecting a plane with one or both of the conical sections 54, 56. An end aperture portion 48b can be a half-circle with a 0.05 inch radius. The detector 44 can have, for example, a polished brass interior. It will be understood that a variety of different geometries could be used to form photon collectors without departing from the spirit and scope of the present invention.

Figures 4A-4D illustrate, in section, a variety of alternate collector geometries which embody the present invention. For example, Fig. 4A illustrates a tubular or cylindrical member 70 with a aperture formed by intersecting the member 70 with the plane thereby producing the aperture having a plane or bounding surface 72. The member 70 has a cylindrical, internal reflecting surface 70a to direct scattered light to the sensor 52. The member may be a cylindrical brass tube cut at an angle.

Figs. 4B through 4E illustrate alternate collectors wherein, for example, with respect to Fig. 4B, a body having a first conical cross-section 74 is intersected with a body having a second conical cross-section 76. One or both of the conical cross-sections is then sliced by a geometrical element, such as a plane, thereby forming a aperture such as an aperture defined by surface 78. An end aperture portion 78a can have a semi-circular shape with a 0.03 inch radius.

Alternately, it is possible to form a collector, such as the collector 80 of Fig. 4D which is formed with a cylindrical hollow body section 82 which is intersected with a hollow conical section 84. An aperture is formed therein by intersecting a portion of the body sections 82, 84 with a plane, thereby forming a planar upper surface 86 which bounds the aperture. It will be understood that the collectors of Figs. 4A through 4D all function as does the collector 44 previously described.

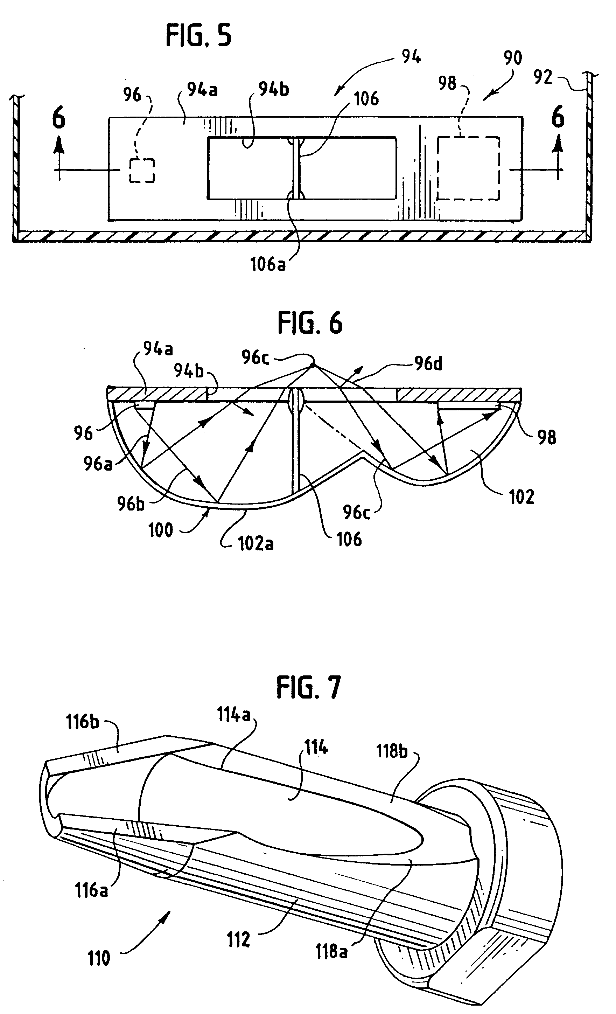

Yet another form of a scattered photon reflector is illustrated in Fig. 5. In Fig. 5, a photoelectric detector 90 is formed with a housing 92. The housing 92 carries a scattered light reflector structure indicated generally at 94. The structure 94 can be formed using solid state fabrication techniques.

The structure 94 includes a opaque substrate 94a upon which is defined a generally rectangularly shaped aperture 94b. The substrate 94a carries a source of radiant energy, which could be a light emitting diode, such as the diode 96 and a sensor of scattered, reflected, radiant energy which could be a photodiode 98. Both the source 96 and sensor 98 could be deposited on the substrate using conventional solid state processing techniques.

Displaced from the source 96 and the sensor 98 is a curved, deposited reflective layer 100. The reflective layer 100 is supported by a curved region of optically transparent material 102 such as epoxy. The transparent material also fills the aperture 94b defined in the substrate 94a.

A curved peripheral surface 102a of the transparent material carries the deposited reflective layer 100. The surface 102a, and reflective layer 100 could be formed as selected partial parabolic or partial ellipsoid-type shapes of a type which would be understood by those of skill in the art. Positioned in the region filled with the transparent material 102, is a septum 106 which is formed of optically opaque material and secured by opaque cement 106a. The septum 106 optically isolates the region of the material 102 which contains the source 96 from the region of the material 102 which contains a sensor 98.

The integrated structure 94 could be positioned in the housing 92. Electrical energy could be provided to the source 96 and signals detected off of the photodiode 98 using deposited conductors of a conventional fashion.

In operation, the source 96 would be electrically energized and emit light rays, such as the rays 96a, 96b. The emitted rays are in turn, reflected off of the reflective layer 100 and pass through the transparent material 102. They exit an upper surface of the aperture 94b whereat they are bent as they enter the ambient atmosphere within the housing 92. The reflected, bent rays are focused at a focal point 96c.

Smoke particles in the vicinity of the focal point 96c, will produce scattered light such as scattered rays 96d and 96e. The scattered rays 96d, 96e reenter the transparent material at the aperture 94b, are again reflected off of the layer 100 and directed onto the photodiode 98 whereat they are collected and sensed.

It will be understood that a variety of different geometries could be formed on the substrate 94a without departing from the spirit and scope of the present invention. In particular, the reflective layer 104 could be formed with a variety of shapes while still achieving the same result of collecting scattered light and reflecting same onto a sensor such as the sensor 98.

Figure 7 illustrates a alternate form of a reflector 110 useable with the detector 30. The reflector 110 includes a cylindrical hollow body 112 which defines an internal, generally cylindrical region 114. The body 112 is sliced by first and second planes thereby forming edges 116a, b and 118a, b.

The aperture formed, defined by the edges 116a, b and 118a, b provides a receiving region for light scattered in the detector volume from the beam 40. A photodetector, like the photodiode 52 can be located in the base of the housing 112, comparable to the location of the photodiode 52 as illustrated in Figs. 2 and 3b.

The reflector 110 could be molded for example, of a non-reflective plastic material. In such a instance, the interior surface 114 could be coated with a bright, reflective chromium plating. The chromium could be deposited on one or more base layers as would be understood by those of skill in the art. The chromium coating could be on the order of .25 microns thick.

Chromium is particularly suitable as a reflective coating for a reflective collector such as the collector 110 in that it has a reflective co-efficient of .64 in the infrared wavelength range of 780 to 830 nanometers. The source of radiant energy 38 could for example, include a laser diode which generates a output frequency of 780 nanometers.

The above noted reflective coating, indicated at 114a in Fig. 7 is especially beneficial in that it resists corrosion caused by airborne contaminants such as SO₂ and H₂S. One corrosion test, the chromium reflective coating 114a should be expected to pass is UL Standard #268. While other corrosion resistant coatings, such as gold, could be used, chromium plating is relatively low cost, and has excellent infrared reflectance.

It will be understood that reflective chromium plated coatings of the type noted above could be used with any of the reflective collectors of Figs. 3a, 3b, 4a-4d, without departing from the spirit and scope of the present invention.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A photoelectric-type smoke detector comprising:
a housing which defines a internal region for receiving particles of ambient smoke;
a source for directing radiant energy within said housing;
a radiant energy collector carried within said housing wherein said collector includes a generally cylindrical, plated corrosion resistant reflective surface which extends continuously around a circular cross-section; and
a sensor of radiant energy wherein said collector is oriented to reflect at least some of the radiant energy, scattered by the smoke particles, onto said sensor.

2. A detector as in claim 1 wherein said reflective surface includes a layer of chromium.

3. A detector as in claim 2 wherein said source is carried within said region.

4. A detector as in claim 2 wherein said collector includes first and second ends and wherein said first end defines an aperture for receipt of the scattered radiant energy.

5. A detector as in claim 2 wherein said collector is elongated, generally cylindrical and defines at least one elongated aperture for receipt of scattered radiant energy.

6. A detector as in claim 2 wherein the housing is formed of at least one conically shaped section.

7. A detector as in claim 2 wherein said beam of radiant energy has a wavelength on the order of 780 nanometers.

8. A detector as in claim 1 wherein said beam of radiant energy has a wavelength on the order of 780 nanometers.

9. A detector as in claim 8 wherein said source is carried within said region.

10. A detector as in claim 8 wherein said collector includes first and second ends and wherein said first end defines an aperture for receipt of the scattered radiant energy.

11. A detector as in claim 8 wherein said collector is elongated, generally cylindrical and defines at least one elongated aperture for receipt of scattered radiant energy.

12. A method of collecting scattered radiant energy using the smoke detector as claimed in claim 1, comprising the steps of:
defining a scattering volume;
directing radiant energy into the volume, at least in part, in a first direction;
admitting smoke into the volume;
scattering a portion of the radiant energy in response to the presence of the smoke;
reflecting, via a corrosion resistant collector, a portion of the scattered radiant energy in a direction which extends, at least in part, along the first direction toward a sensing region; and
sensing at least some of the radiant energy reflected along the collector.
